# EUROPÄISCHE PATENTSCHRIFT

(11) **EP 1 187 754 B1**
(45) Veröffentlichungstag und Bekanntmachung des Hinweises auf die Patenterteilung: **05.02.2003**
(21) Anmeldenummer: 00943618.9
(22) Anmeldetag: 17.05.2000
(51) Int. Cl.: B62D 25/12, B60R 21/34

(54) **FRONTHAUHBENANORDNUNG**
FRONT OPENING HOOD SYSTEM
SYSTEME DE CAPOT AVANT

(30) Priorität: 17.05.1999 DE 19922107; 17.05.1999 DE 19922455; 17.05.1999 DE 19922454; 08.10.1999 DE 19948459
(43) Veröffentlichungstag der Anmeldung: 20.03.2002
(73) Patentinhaber: Edscha AG, 42855 Remscheid (DE)
(72) Erfinder: POLZ, Andreas, 45881 Gelsenkirchen (DE); SCHLEGEL, Peter, 42327 Wuppertal (DE); NADSTAWEK, Heiner, 45968 Gladbeck (DE)
(74) Vertreter: Sparing, Rolf Klaus
(86) Internationale Anmeldenummer: DE0001599
(87) Internationale Veröffentlichungsnummer: WO00069705

(56) Entgegenhaltungen:
- DE-A- 19 712 961
- US-A- 5 697 467
- PATENT ABSTRACTS OF JAPAN vol. 009, no. 007 (M-350), 12. Januar 1985 (1985-01-12) & JP 59 156872 A (NISSAN JIDOSHA KK), 6. September 1984 (1984-09-06)
- PATENT ABSTRACTS OF JAPAN vol. 016, no. 557 (M-1340), 27. November 1992 (1992-11-27) & JP 04 212677 A (NISSAN MOTOR CO LTD), 4. August 1992 (1992-08-04)

## Beschreibung

Die Erfindung betrifft eine Fronthaubenanordnung nach dem Oberbegriff des Anspruchs 1.

Aus der Praxis sind inzwischen zahlreiche Sicherheitseirichtungen wie Airbag und dgl. Insassen von Personenkraftwagen bekannt. Dagegen sind Schutzmaßnahmen für Fußgänger, die vom bug einen Personenkraftwagen erfaßt werden, bisher kaum vorgeschlagen oder praktisch umgesetzt worden. Als besonders problematisch erweisen sich Unfälle mit Fußgängern, die bei Geschwindigkeiten bis zu 60 km/h erfolgen, da der Fußgänge, wenn er frontal erfaßt wird, oft mit dem Kopf auf die Motorhaube des Personenkraftwagen aufschlägt und an dieser Verletzung stirbt. Die Schwere der Verletzung ergibt sich dadurch, daß die zumeist aus dünnem Blech ausgebildete Front- bzw. Motorhaube zwar dazu neigen würde, sich zu verbiegen, es aber zu einem Aufschlag auf unter der Motorhaube angeordneten, praktisch nicht oder nur schwer deformierbaren Teilen wie dem Motorblock, dem Federbeindohm, dem Luftfilter, dem Ventildeckel oder den Längs- und Querträgern des Fahrzeugs kommt. Es wäre wünschenswert, wenn der aufprall insbesondere des Kopfes eines Fußgängers, in seinen Folgen abgemildert werden könnte. Bei Geschwindigkeiten über 60 km/h wird dagegen der Fußgänger, nachdem er erfaßt wurde, über das Fahrzeug geschleudert.

DE-C-29 22 893 schlägt vor, die Motorhaube und den Kotflügel im Bereich der zwischen diesen beiden Teilen gebildeten Fuge mit entlang der beiden Teile verlaufenden, energieabsorbierenden U-Profilen auf Aufbautielen abzustützen, die im Falle eines Zusammenpralls den Aufprall in Deformationsenergie umwandeln. Nachteilig bei dieser Anordnung ist einerseits, daß schon erhebliche Kräfte auf die Profile einwirken müssen, um diese zu verbiegen.

Zudem sind diese sonst nutzlosen U-Profile kostspielig in der Anschaffung und aufwendig zu montieren.

DE-A-27 37 876 beschreibt eine Aufprallschutzvorrichtung, die ein netzartiges Auffangelement mittels einer vorgespannten Schwenkklappe aus einer Ruheposition, in der das Netz im wesentlichen an der Fronthaube anliegt, in eine Auffangposition verlagert, welche im wesentlichen vor der Windschutzscheibe des Kraftfahrzeugs verläuft. Diese Einrichtung dient mehr der Windschutzscheibe als dem Schutz des Fußgängers vor einem zu harten Aufprall auf die Fronthaube. Außerdem kann jede Berührung des die Schwenkbewegung auslösenden, in der vorderen Stoßstange integrierten Sensors das Netz dazu veranlassen, ausgelöst zu werden, wodurch eine Vielzahl von Konstellationen eintreten, in denen das Netz dem Fahrer die gesamte Sicht nimmt.

DE-A-28 41 315 beschriebt eine Sicherheitseinrichtung, bei der in Reaktion auf ein Signal eines im Frontbereich eines Fahrzeugs angeordneten Sensors zur Erfassung einer Kollision mit einem Fußgänger die Fronthaube aus einer Ruheposition in eine demgegenüber angehobene Aufprallposition durch eine Kolbe-Zylinder-Einheit verlagert wird, wobei die Verlagerung durch einen Energiespeicher erfolgt. Beim Anheben wird die Fronthaube um eine an der Stirnseite des Fahrzeugs angeordnete horizontale Drehachse verschwenkt.

DE-A-197 10 417 beschreibt eine Anordnung zum Anheben der Fronthaube, bei der eine Verschwenkung um eine an der Stirnseite des Fahrzeugs angeordnete horizontale Drehachse durch dieselbe Gasfeder ausgelöst wird, die auch das Anheben der an der anderen Ende angelenkten Fronthaube unterstützt.

DE-A-197 21 565 beschreibt eine Sicherheitseinrichtung an Kraftfahrzeugen zum Anheben der Fronthaube, bei der das Anheben der Fronthaube geschwindigkeitsabhängig durch einen mit dem Haubenschloß integrierten Mechanismus erfolgt. Hierzu wird entweder die üblicherweise aus Sicherheitsgründen aus der Fahrerkabine ausgelöste Entriegelung des mit einer Druckfeder beaufschlagten Schlosses durch einen Sensor, der durch einen Aufprall ausgelöst wird, ausgelöst, oder alternativ hierzu insbesondere bei höheren Geschwindigkeiten eine in den Schließbolzen der Haubenschlosses integrierte Kolben-Zylinder-Einheit durch eine Treibladung expandiert. Nachteil dieser Anordnung ist zunächst, daß die zum Schließen der Fronthaube erforderliche Kraft einen bestimmten Schwellenwert nicht übersteigen darf, um dem Fahrer zu erlauben, die Fronthaube bequem zu schließen. Da die auftreffenden Kräfte bei einem Personenunfall bedeutend sind, wird die Fronthaube schnell herabgedrückt und es kommt zu den bekannten Personenschäden insbesondere im Kopfbereich. Auch das Vorsehen einer Treibladung zum Expandieren Kolben-Zylinder-Einheit ist problematisch, da deren Haltbarkeit, insbesondere bei wenig geschützter Anordnung, begrenzt und der Austausch problematisch ist. Außerdem besteht die Gefahr, daß Druckfeder und die Kolben-Zylinder-Einheit gleichzeitig ausgelöst werden, wodurch die Öffnung der Fronthaube so groß werden würde, daß der Fahrtwind die Haube gegen die Windschutzscheibe in Anlage bringt und dem Fahrer die Sicht versperrt.

DE-A-27 11 338 beschreibt eine Einrichtung zum Dämpfen des Aufpralls eines Fußgängers, bei der ein Luftsack im Bereich des Windlaufs angeordnet ist, dessen Befüllung durch eine Sensorsignal ausgelöst wird. Dabei kann der Luftsack so angeordnet sein, daß er zugleich einen Teil der Fronthaube anhebt, wobei er hierzu eine Federkraft überwindet, die zwei über einen Drehpunkt miteinander verbundene Lenker, von denen einer drehbar an der Fronthaube und der andere drehbar an einem festen Teil des Kraftfahrzeugs angeordnet ist, in eine angewinkelte Lage vorspannt. Ferner wird vorgeschlagen, nachgiebige Profilkörper in Streifenform in der Art einer Dichtung zwischen Haube und Seitenteilen anzuordnen, um damit einen weiteren Schutz beim Aufprall zu schaffen.

DE-A-27 11 339 beschreibt eine an der Frontseite angelenkte Fronthaube, bei der die Anlenkung derart nachgiebig ausgebildet ist, daß sie eine horizontale Verschiebung der Fronthaube durch den Anprall eines Fußgängers zuläßt, wobei die nach hinten verlagerte Fronthaube an der hinteren Seite mit einem Ende eines starren Verriegelungselements verbunden ist, dessen anderes Ende bei Verschiebung der Fronthaube nach hinten in einer Führungskurve derart nach oben und nach hinten verlagert wird, daß die Fronthaube eine Bewegung nach oben ausführt. Dieses Anheben funktioniert nur unter der Voraussetzung, daß es tatsächlich zu einer horizontalen Verlagerung der Fronthaube kommt, was beispielsweise beim Aufprall von Kindern nicht immer gewährleistet ist.

EP-A-0 509 690 beschreibt eine Fronthaube, die an ihrer Vorderseite derart an der Fahrzeugstruktur angelenkt ist, daß aufgrund eines Anpralls die Fronthaube nach hinten verlagert wird, wobei die an der hinteren Seite angeordneten Verschluß- bzw. Schwenkmittel aufgrund einer Bewegung der Fronthaube nach hinten eine Schwenkbewegung der Fronthaube nach oben auslösen, so daß der Deformationsweg der Haube unter dem Aufprall eines Fußgängers vergrößert wird. Die Schwenkbewegung wird beispielsweise durch ein Viergelenkscharnier geführt, das sonst zur Verschwenkung der Fronthaube eingesetzt wird, wenn der Zugang zum Motor und anderen Teilen freigegeben werden soll. Auch hier tritt ein Anheben der Fronthaube erst mit sehr kräftigem Verlagern der Fronthaube ein, während ein schwacher Aufprall die Fronthaube nicht nach hinten und somit auch nicht nach oben verlagert.

Die gattungsgemäße DE-A-197 12 961 beschreibt die Anordnung einer Fronthaube an einem Fahrzeug, bei der ein Scharnier auf einem Scharnierträger angeordnet ist, welcher Scharnierträger im Falle eines aufprallenden Fußgängers nach oben verschwenkt wird, um die Fronthaube anzuheben. Problematisch ist bei dieser Anordnung, daß das Haubenschloß für die Fronthaube eine Schwenkachse festlegt, die keine wahlfreie Verlagerung des Scharnierträgers zuläßt, weshalb der beschriebene Scharnierträger beispielsweise blockiert.

JP-A-11 115 680 beschreibt eine Fronthaubenanordnung, bei der die Fronthaube aufgrund eines entsprechenden Signals eines Kollisionsdetektors im Bereich der Windschutzscheibe angehoben wird. Hierbei wird die Fronthaube über eine Kolben-Zylinder-Einheit angehoben, während das Schwenkgelenk die Verlagerung der Fronthaube über einen im Bereich der karosserieseitigen Anlenkung schwenkgelenkig angeordneten Lenker durch Verlagerung in einem Langloch nachvollzieht. Der Kolben wird nicht zum Öffnen und Schließen der Fronthaube verlagert.

JP-A-10 152 074 beschreibt eine Fronthaubenanordnung, bei der eine Verlagerung der Fronthauben nach hinten bei einem Frontalcrash vermieden werden soll, wobei dies durch eine Lenker-Langloch-Lösung erreicht werden soll. Hierbei ist eine Kreuztischanordnung, mit der das Stützteil für die Haube im wesentlichen parallel zu der Karosserie angehoben und abgesenkt werden kann, vorgesehen. Eine Betätigung der Einrichtung als Scharnier zum Öffnen der Fronthaube ist nicht möglich. Dementsprechend ist die Fronthaube nicht fest mit dem Stützteil verbunden, sondern liegt unverbunden auf.

Insgesamt ist noch keine Lösung vorgeschlagen worden, die ein kostengünstige und nach einem Einsatz leicht wiederherstellbare Anordnung vorschlägt, welche konstruktiv so ausgereift ist, daß sie in Serienfahrzeugen eingesetzt werden könnte.

Es ist die Aufgabe der Erfindung, eine Fronthaubenanordnung nach dem Oberbegriff des Anspruchs 1 vorzuschlagen, die einen kostenmäßig und technisch realisierbaren Fußgängerschutz liefert.

Diese Aufgabe wird bei der eingangs genannten Fronthaubenanordnung erfindungsgemäß mit den kennzeichnenden Merkmalen des Anspruchs 1 gelöst.

Die Ausbildung des Viergelenk-Scharniers mit wenigstens einem Lenker mit einer in ihrer Lage veränderbaren Anlenkung an ein Anschlagteil für Karosserie oder Fronthaube ist eine Verkörperung des allgemeinen Gedankens der Erfindung, unter Überlast eine Veränderung des Abstands der beiden an einem Anschlagteil bzw. an der Karosserie oder an der Fronthaube angeordneten Anlenkungen zuzulassen, um damit das Viergelenk für eine weitere Schwenkkurve, die sich von der eigentlichen Schwenkkurve des Viergelenks unterscheidet, freizugeben.

Die erfindungsgemäße Fronthaubenanordnung weist vorteilhaft drei Endstellungen auf, neben der bekannten Schließstellung, bei der die Fronthaube verriegelt ist und die während der Fahrt des Fahrzeugs eingenommen wird und der ebenfalls bekannten Öffnungsstellung, bei der der Zugang zu dem Motorraum für eine Bedienperson freigegeben ist noch eine dritte Endstellung, die als Überlaststellung bezeichnet werden kann und die nachstehend noch in Einzelheiten erläutert wird, um den Anforderungen an eine unter dem Aufprall eines Fußgängers zurückweichenden der Fronthaube zu genügen.

Das Viergelenk-Schamier kann vorteilhaft mittels weiterer Gelenke ergänzt werden, um es als Siebengelenk-Scharnier auszubilden.

In der Ausgangslage ist die Fronthaube durch das Haubenschloß, das vorzugsweise im vorderen Bereich der Fronthaube angeordnet ist, verriegelt, wobei das Viergelenk-Scharnier aus zwei Lenkern und zwei an den in den Endbereichen der Lenkern angeordneten Drehpunkten gelenkig mit den Lenkern verbundenen Schamierteilen, die über bekannte Anschlagmittel der Fronthaube bzw. mit der Karosserie des Fahrzeugs verbunden sind, einen Schwenkweg der Fronthaube definiert, der ein freies hin und her schwenken der Fronthaube zwischen der Öffnungsstellung und der Schließstellung zur wahlweisen Freigabe des Zugangs zum Motorraum ermöglicht. In der Öffnungsstellung, deren Erreichen vorzugsweise mit Unterstützung einer Feder, beispielsweise einer Gasfeder, unterstützt ist, kann die Fronthaube über eine Stange zwischen Karosserie und Fronthaube gehalten werden, um einer Bedienperson einen ungefährdeten Zugang zu ermöglichen. Alternativ kann bei Erreichen einer Übertotpunktlage des Viergelenk-Scharniers bzw. der Viergelenk-Scharniere, da in der Regel an beiden hinteren Ecken der in der Abwicklung viereckig ausgebildeten Fronthaube jeweils eines angeordnet ist, die Fronthaube ohne externe Hilfsmittel gehalten sein.

Während der Fahrt des Fahrzeugs , bei dem es sich Zweckmäßigerweise um einen Kraftwagen handelt, ist die Fronthaube in ihrer Schließstellung angeordnet und durch das Haubenschloß verriegelt, so daß der Motorraum, in dem eine Reihe von harten Teilen wie der Motorblock, der Federbeindohm und andere angeordnet sind, durch die Fronthaube in der Art einer schützende Hülle, die in einem ausreichenden Abstand von den wenigstens bei Aufprall für den Kopf eines Fußgängers schädlichen Teile angeordnet ist, einen wahlweise an der Unterseite der Fronthaube mit einem komprimierbar ausgebildeten, ggf. mit Aufprall- und/oder Schallenergie aufnehmenden Schaum ausgekleideten oder auch freien Abstand aufweist.

Die erfindungsgemäße Fronthaubenanordnung ermöglicht ausgehend zumindest von der Schließstellung der Fronthaube eine Verlagerung der Fronthaube in Richtung auf die Überlaststellung, in der der Abstand zwischen der Fronthaube und den gefährlichen Teilen des Motorraums reduziert ist, wobei erfindungsgemäß im Überlastfall das Viergelenk-Scharnier sowie ggf. weitere Teile der Fronthaubenanordnung für die Verlagerung in Richtung auf die Überlaststellung bzw. in die Überlaststellung einen derartigen Anteil an Aufprallenergie des Fußgängers in Verlagerungs- bzw. Deformationsenergie umwandeln, daß der Aufprall bei einer Geschwindigkeit des Fahrzeugs von bis zu 60 Km/h für den Fußgänger mit hoher Wahrscheinlichkeit für diesen keine tödlichen Folgen mehr hat.

Unter der Last eines Aufpralls eines Fußgängers wird die Fronthaube durch eine Lageänderung wenigstens eines Gelenks des wenigstens einen Lenkers des Viergelenk-Scharniers in Richtung auf die Überlaststellung verlagert, wobei der Verlagerungsweg durch Umwandlung der Aufprallenergie aufgrund des allmählichen Nachgebens der Fronthaube den Aufprall mildert und damit die Schwere des Aufprails reduziert. Es versteht sich, daß auch eine Deformationsenergie der Fronthaube selbst hierbei zu berücksichtigen ist, wobei dies durch die Einspannung in ein Haubenschloß und zwei Viergelenk-Scharniere in der Regel nur begrenzt möglich ist.

Um die Verlagerungsbewegung der Fronthaube in Richtung auf die Überlaststellung zu ermöglichen, ist wenigstens eines der Gelenke wenigstens eines Lenkers des Vierglenk-Scharniers zu einer Änderung seiner Lage ausgebildet, wobei die Art der Lageänderung, solange sie mit einer Energieumwandlung einhergeht, nicht auf eine bestimmte technische Ausgestaltung festgelegt ist. Es kommen sowohl reversible Lageänderungen durch Vorsehen von Energiespeichern in der Art von Federn oder dergleichen in Betracht als auch irreversible Längenänderungen durch absprengbare Schalungen des Gelenks, komprimierbaren Schaum, Metallegierungen, die wenigstens abschnittsweise eine Veränderung der Lage bei entsprechender Einschnürung des Querschnitts eines das Gelenk tragenden Reiters zulassen oder auch als Klemmpassung ausgebildete, zweiteilig zusammen gesteckte Gelenke, bei denen das Aufweiten der Preßpassung die erforderliche Deformationsenergie liefert. Es ist auch unwesentlichen, ob einer der beiden Lenker des Viergelenk-Scharniers zusätzlich eine Verlängerung erfährt oder der andere der beiden Lenker hierzu eine Verkürzung, z.B. eine Stauchung erfährt.

Zweckmäßigerweise sind beide Lenker des Viergelenkscharniers mit jeweils einem Gelenk mit veränderbarer Lage ausgebildet, wobei auch hier sowohl eine Kombination aus zwei - ggf. in einem unterschiedlichen Maße - in eine Richtung verlagerbaren Gelenken oder einem ausdehnbaren und einem stauchbaren Gelenk in Betracht kommt. Neben dem Vorteil, daß bei zwei zu einer Änderung ihrer Lage ausgebildeten Gelenken die Aufprallenergie auf beide Gelenke verteilt wird und somit die Fronthaubenanordnung besser dimensioniert werden kann, läßt sich hierdurch auch ein asymmetrisches Aufprallen auf die Fronthaube besser auffangen, und der für die Umwandlung der Aufprallenergie erforderliche Verlagerungsweg der Fronthaube kann entsprechend etwas kürzer vorgesehen werden, wodurch der von der Fronthaube zu den harten Teilen des Motorraums zu belassende Abstand reduziert werden kann und der Luftwiderstandsbeiwert des Fahrzeugs weniger beeinträchtigt wird. Zudem ist es dann möglich, die Verlagerungsbewegung um die verlagerbaren Gelenke dann so vorzusehen, daß bei Verschwenken in Richtung auf die Überlaststellung die Schwenkbewegung um das Haubenschloß herum eine Drehbewegung definiert, so daß eine horizontale Verschiebung der Fronthaube nicht vorgesehen werden muß. Vorzugsweise sind beide in ihrer Lage veränderbaren Gelenke an dem Anschlagteil für die Karosserie vorgesehen, wo entsprechende Führungen leichter untergebracht werden können.

Vorzugsweise umfaßt das in seiner Lage veränderbare Gelenk eine integrierte Energiespeichereinheit, die von der Aufprallenergie gespannt wird und damit eine Lageänderung des Gelenks bewirkt. Diese Weiterbildung ist deswegen von besonderem Vorteil, weil möglicherweise unbeabsichtigte Längenänderungen durch andere Überlasten, beispielsweise dadurch, daß Kinder auf der Fronthaube auf und ab springen oder dergleichen, zwar zu einer Schwenkbewegung in Richtung auf die Überlaststellung der Fronthaube führen, die Fronthaube im Anschluß an die unbeabsichtigte Beanspruchung aber wieder in die Schließstellung zurück verschwenken. Hierdurch kann die Fahrbereitschaft des Fahrzeugs nach einer Überlast oder einem Aufprall schnell wiederhergestellt werden und zudem das Viergelenk-Scharnier auch nach einem ersten Aufprall eines Fußgängers auf die Fronthaube mit unveränderter Charakteristik weiter eingesetzt werden. Die Energiespeicher sind zweckmäßigerweise so in dem Lenker angeordnet, daß sie in der Schließstellung die Haltekraft der Fronthaube soweit unterstützen, daß bei einem Frontalzusammenstoß der Insassenschutz nicht herabgesetzt ist.

Zweckmäßigerweise ist der Energiespeicher eine Feder, die gleichermaßen als Zug- oder Druckfeder ausgebildet sein kann und somit eine Längenänderung vollzieht, die in die Richtung der sie spannenden Kraft erfolgt. Somit kann mittels einer Feder vorteilhaft sowohl eine faktische Stauchung als auch eine Verlängerung des Lenkers durch Lagerveränderung des zugeordneten Gelenks konstruktiv vorgesehen werden. Bei der Feder kann es sich beispielsweise um eine Schraubenfeder oder dergleichen handeln.

Der Energiespeicher kann ferner einen deformierbaren Bestandteil umfassen, der die Aufprallenergie in Deformationsenergie durch irreversible plastische Formänderung des deformierbaren Bestandteils des Energiespeichers umwandelt. Hierbei wird durch die Längenänderung des Lenkers die Aufprallenergie durch die plastische Umformung des deformierbaren Bestandteils abgebaut, wobei die hieraus resultierende Lageänderung bzw. der hieraus resultierende Anteil an der Lageänderung des Gelenks nur durch eine erneute plastische Formänderung, beispielsweise mit Hilfe eines entsprechenden Werkzeugs, umkehrbar ist, weshalb für diesen Bestandteil nach einem Aufprall die Fronthaube bleibend in Richtung auf ihre Überlaststellung verlagert bleibt.

Ein bevorzugter deformierbarer Bestandteil ist eine Ummantelung des Gelenks in Schaum oder Kunststoff, der plastisch deformierbar ist. Alternativ ist es möglich, das wenigstens eine mit veränderbarer Lage ausgebildete Gelenk als ein gelenkiges Ende eines Kurzlenkers auszubilden, der vermittels einer Kunststoffumspritzung eine bei Überschreitung der Normallast brechende SollBruchstelle definiert, wodurch das andere gelenkige Ende des Kurzlenkers wirksam wird und ein neues Vierglenksystem freigibt. Diese Variante hat insbesondere den Vorteil, daß das Viergelenk-Schamier durch Austauschen des Kurzlenkers wiederherstellbar ist, wobei alternativ hierzu auch das gesamte Viergelenk-Scharnier ausgetauscht werden kann und das zerstörte Gelenk durch Recycling ersetzt wird. Dieses System hat insbesondere den Vorteil, daß die Fronthaube im Falle eines Frontalzusammenstoßes mit einem anderen Fahrzeug oder gegen ein feststehendes Hindernis immer noch durch den anderen, starren Lenker gehalten wird, und hierdurch die Gefahr deutlich herabgesetzt ist, daß sich die Fronthaube durch die Frontscheibe drückt und damit in den Insassenraum des Fahrzeugs eindringt.

Es versteht sich, daß das Vorsehen einer plastisch verformbaren Kunststoffumspritzung gleichermaßen für Zug- und Druckbeanspruchungen in Betracht kommt.

Bei einem teleskopierbaren Gelenk ist vorzugsweise der das Gelenk tragende Reiter als Kolben in einem hohlen Zylinder ausgestaltet, welcher mit einem oder mehreren fluiden oder pastösen Medien gefüllt ist, wobei durch Eindringen des aufgenommenen Reiters in den Zylinder diese Medien durch einen Drosselauslaß in dem Zylinder gepreßt werden, so daß durch eine gezielte Auswahl der Medienzusammensetzung und der Drossel der Widerstand des teleskopierbaren Gelenks sowohl derart ausgelegt werden kann, daß eine Mindestlast zunächst überschritten werden muß als auch derart, daß der zur Verfügung stehende Verlagerungweg optimiert wird. Hierzu kann der Zylinder auch eine mechanische oder Gasfeder umfassen.

Es versteht sich, daß soweit vorstehend ein mit veränderbarer Lage ausgebildetes Gelenk bezeichnet ist, dieses nicht auf einen axiale Lageänderung beschränkt sein soll, sondern auch ein zugleich ein eine Bahnkurve beschreibendes Gelenk damit auch gemeint ist.

Es versteht sich, daß der Energiespeicher des mit veränderbarer Lage ausgebildeten Gelenks sowohl einen reversiblen als auch zugleich einen irreversiblen Bestandteil umfassen kann, wodurch die Abstimmung und Auslegung des Viergelenk-Scharniers auf den zu erwartenden Aufprall und auf den Abstand des Aufpralls auf die von Fahrzeugmodell zu Fahrzeugmodell unterschiedlich große Fronthaube von den an der Fronthaube angeschlagenen Scharnierteilen der Viergelenk-Scharniere berücksichtigt werden kann, und ferner eine Standardisierung durch unterschiedliche Auslegung im wesentlichen der Feder bei einem bei verschieden Fahrzeugmodellen ansonsten gleichartigen plastisch formänderbaren Bestandteil vorgesehen werden kann.

Es versteht sich, daß besonders bevorzugt eine Fronthaubenanordnung ist, deren Verlagerungsbewegung vollständig reversibel ist, da insbesondere eine solche Anordnung sich in einfacher Weise bei routinemäßigen Überprüfungen des Fahrzeugs zu dessen technischer Überwachung auf Funktionsfähigkeit und Zuverlässigkeit prüfen läßt. Es ist daher zweckmäßig vorgesehen, daß für den Fall des Einsatzes von Bestandteilen, die eine irreversible Änderung im Falle eines Aufpralls ausführen, diese derart anzuordnen, daß sie durch optische Prüfung darauf untersucht werden können, ob sie bereits beschädigt sind.

Um eine Verlagerung ausgehend von der Schließstellung auf die Öffnungsstellung bzw. auf die Überlaststellung der Fronthaube relativ zur Karosserie des Fahrzeugs sicher zu stellen ist es zweckmäßig, daß das Viergelenk-Scharnier an die Fronthaube anschlagende Scharnierteil fest an der Fronthaube des Fahrzeugs anzuordnen, damit die Schwenkbewegung um die fronthaubenseitigen Drehpunkte der Lenker ausgeführt werden kann.

Zweckmäßigerweise ist das Haubenschloß in seinem geschlossenen Zustand derart ausgebildet, daß es ein horizontales Verlagern der Fronthaube zuläßt, um die durch die aufgrund des wenigstens einen Lenkers im Überlastfall weiter nach hinten verlagerten, an der Fronthaube angreifenden Drehpunkte des wenigstens einen Lenkers durch eine entsprechende Verlagerungsbewegung der Fronthaube nach hinten zu ermöglichen. Zu diesem Zweck kann das Haubenschloß derart ausgebildet sein, daß es in einer üblichen Weise zur Entriegelung ausgebildet ist, im geschlossenen und verriegelten Zustand jedoch einen horizontalen Ausweichraum bereithält, der zweckmäßigerweise gegen einen Widerstand, der ebenfalls reversibel oder irreversible deformierbar ist, die Verlagerung der Fronthaube nach hinten ermöglicht. So kann beispielsweise der Ausweichraum die Aufnahme für eine Druckfeder bilden, die z.B. ein als Bügelteil ausgebildetes Halteteil der Fronthaube, das in dem Schloß verriegelt gehalten wird, in Richtung auf eine die Entriegelung ermöglichende Lage vorspannt und im Falle eines Fußgängeraufpralls gespannt wird, wodurch ein Teil der Aufprallenergie absorbiert wird. Diese Maßnahme ist besonders dann vorteilhaft, wenn der Aufprall des Kopfes eines Kindes, der überwiegend im vorderen Bereich der Fronthaube zu erwarten ist, abzufedern ist. Des weiteren ist es möglich, den Ausweichraum mit einem Kunststoffschaumteil auszukleiden, das unter dem Druck eines Aufpralls zerkrümelt und nach dem Aufprall durch ein Ersatzteil ersetzbar ist, wodurch die Funktionsfähigkeit der Fronthaubenanordnung auch nach einem ersten Aufprall für weitere Aufpralle gegeben ist.

Weitere Vorteile und Merkmale der Erfindung ergeben sich aus der nachfolgenden Beschreibung sowie aus den abhängigen Ansprüchen.

Die Erfindung wird nachstehend unter Bezugnahme auf die anliegenden Zeichnungen anhand von bevorzugten Ausführungsbeispielen einer erfindungsgemäßen Fronthaubenanordnung näher erläutert.
- Fig. 1: zeigt eine ausschnittsweise schematisierte Seitenansicht eines Fahrzeugs mit einem bevorzugten Ausführungsbeispiel einer erfindungsgemäßen Fronthaubenanordnung.
- Fig. 2: zeigt eine schematische Seitenansicht einer ersten Ausführungsform eines Viergelenk-Scharniers der Fronthaubenanordnung aus Fig. 1 bei geschlossener und geöffneter Fronthaube.
- Fig. 3: zeigt eine schematische Seitenansicht des Viergelenk-Scharniers aus Fig. 2 bei geschlossener und überlasterer Fronthaube.
- Fig. 4: zeigt eine schematische Seitenansicht einer weiteren Ausführungsform eines Viergelenk-Scharniers der Fronthaubenanordnung aus Fig. 1 bei geschlossener und überlasteter Fronthaube.
- Fig. 5: zeigt eine schematische Seitenansicht einer weiteren Ausführungsform eines Viergelenk-Scharniers der Fronthaubenanordnung aus Fig. 1 bei geschlossener und geöffneter Fronthaube.
- Fig. 6: zeigt eine schematische Seitenansicht des Viergelenk-Scharniers aus Fig. 5 bei geschlossener und überlasteter Fronthaube.
- Fig. 7: zeigt eine schematische Seitenansicht einer weiteren Ausführungsform eines Viergelenk-Schamiers der Fronthaubenanordnung aus Fig. 1 bei geschlossener Fronthaube.

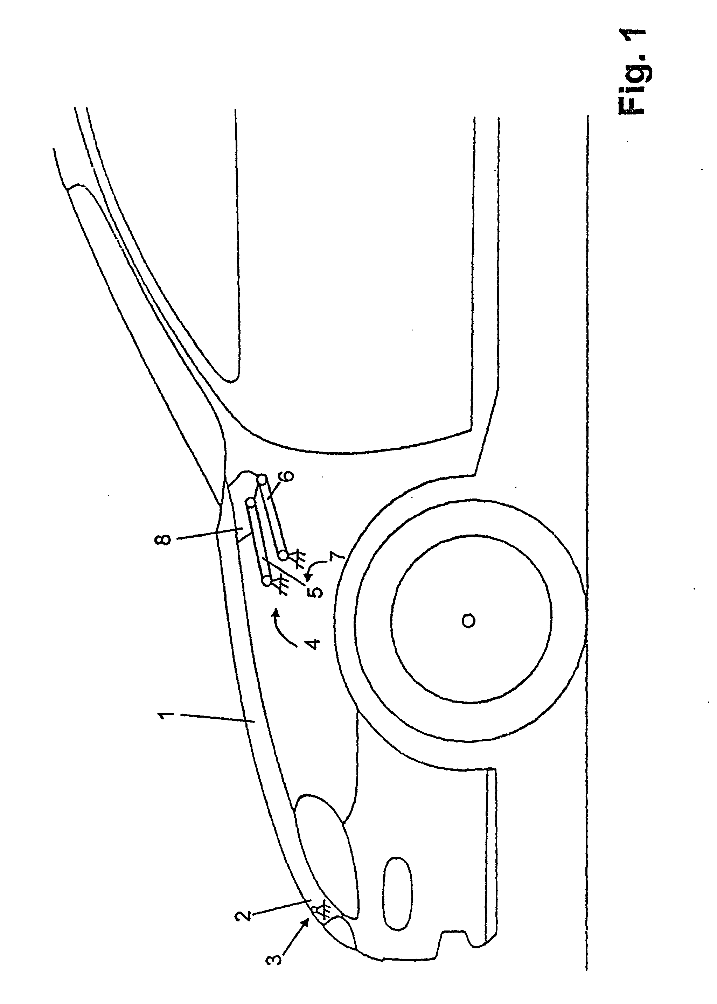

Fig. 1 zeigt in Seitenansicht die Frontpartie eines Kraftfahrzeuges, dessen Motorraum durch eine Fronthaube 1 verschließbar ist. Die Fronthaube 1 wird mittels eines im Vorderbereich 2 der Fronthaube 1 angeordneten Haubenschlosses 3 ver- bzw. entriegelt und ist an ihrer der Fahrerkabine zugewandten Seite jeweils randseitig mittels eines von zwei Scharnieren 4 an dem Rahmen der Karosserie angelenkt. Das Scharnier 4 ist vorliegend als Viergelenk-Scharnier ausgebildet, das aus einem längeren Lenker 5 und einem kürzeren Lenker 6 besteht, deren Gelenke an ein am Rahmen befestigten Teil 7 bzw. an einer an der Fronthaube 1 angeordnetes Teil 8 schwenkbar angelenkt sind. Die Fronthaube 1 läßt sich aus der in Fig. 1 dargestellten Schließstellung durch Verschwenken um die Gelenke am Rahmenteil 7 in seine Öffnungsstellung und wieder zurück verschwenken.

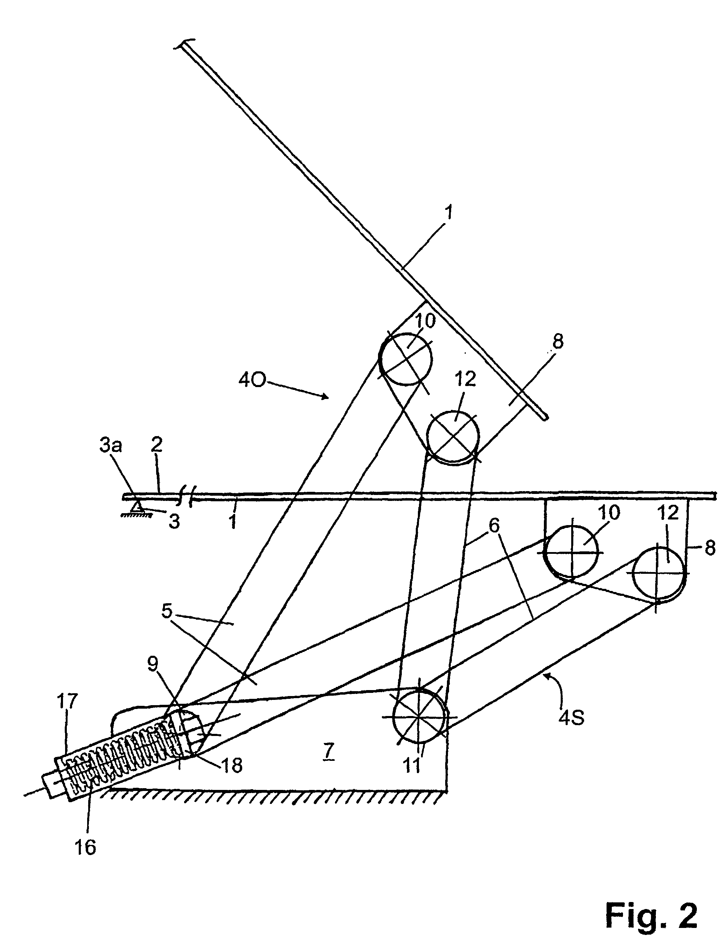

In Fig. 2 ist eine erste bevorzugte Ausführungsform des Schamiers 4 gezeigt, wobei die Drehgelenke des längeren Lenkers 5 mit 9 und 10 bezeichnet sind und die Drehgelenke des kürzeren Lenkers 6 mit 11 und 12 bezeichnet sind. Man erkennt, daß die Gelenke 10, 11 und 12 alle drei fest in dem zugeordneten Rahmenteil 7 bzw. Fronthaubenteil 8 angeordnet sind.

Der Drehpunkt 9 des längeren Lenkers 5 ist nicht starr in dem Rahmenteil 7, sondern relativ zu dem Rahmenteil 7 auf einer gegen die Vorspannung einer als Druckfeder Komprimierbar ausgebildeten Energiespeichereinheit 16, im wesentlichen in Verlängerung der Erstreckung des der Feder 16 zugeordneten längeren Lenkers 5, gelagert. Wie in Fig. 2 genauer zu sehen, lastet ein Teil des Eigengewichts der Fronthaube 1 in der in Fig. 2 dargestellten Öffnungsstellung des Viergelenkscharniers 4 aus Fig. 2 auf dem kürzeren Lenker 6, der unter dieser Last nicht nachgibt. Man erkennt insbesondere in Fig. 2, daß sowohl in der Schließstellung, die mit dem Symbol S angedeutet ist, als auch in der Öffnungsstellung, die mit dem Symbol O angedeutet ist, die Lage des karosserieseitigen Gelenks 9 des längeren Lenkers 5 im wesentlichen unverändert bleibt.

Eine Energiespeichereinheit 16 ist in etwa in axialer Verlängerung des längeren Lenkers 5 angeordnet und trägt deren, dem Rahmenteil 7 zugeordnetes Drehgelenk 9 auf einem in einer Führung 17 angeordneten Reiter 18, wodurch bei horizontaler Verlagerung x der Fronthaube 1 aufgrund eines Aufpralls die Feder 16 um einen Betrag d₉ ausgezogen wird und die Aufprallenergie entsprechend abgebaut wird. Die Höhenänderung der Fronthaube 1 beträgt y. Die in das Rahmenteil 7 integrierte Führung 17 ist im wesentlichen mit der Erstreckung des längeren Lenkers 5 im Belastungsfall H aufgrund der Last eines Aufpralls A eines Fußgängers ausgefluchtet. Es versteht sich, daß auch ein Gelenk des kürzeren Lenkers 6 an Stelle des Gelenks 9 in seiner Lage veränderbar ausgebildet sein könnte.

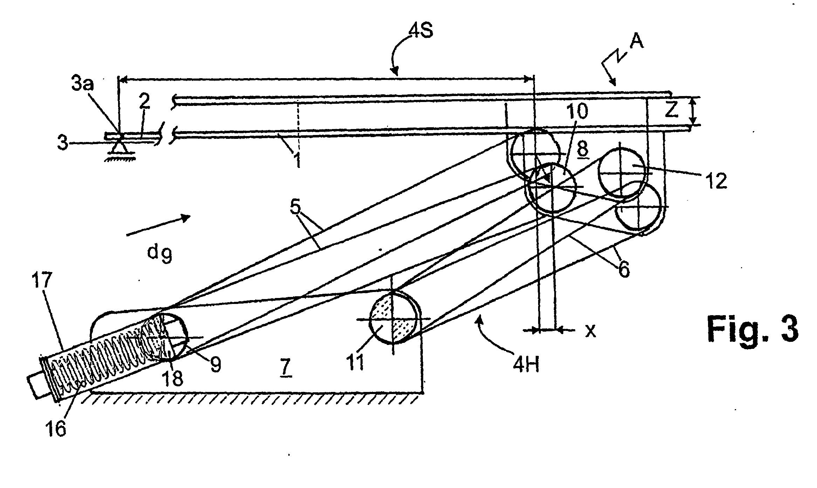

In Fig. 3 ist zudem schematisch das Haubenschloß 3 dargestellt, welches, wie in der schematischen Darstellung zu erkennen, verschieblich an der Karosserie angeordnet ist, um eine horizontale Verlagerung der Fronthaube 1, die einhergeht mit einem Verschwenken der Fronthaube 1 um die in dem Haubenschloß gebildete, mit 3a bezeichnete Achse zu ermöglichen. Man erkennt, daß die Fronthaube 1 im Bereich des an diese angeschlagenen Haubenteils 8 einen Verlagerungsweg v ausführt. Der Weg v setzt sich aus einer horizontalen Komponente x und einer vertikalen Komponente z zusammen, die in Fig. 3 ebenfalls angetragen sind. Man erkennt also, daß bei Aufprall eines Fußgängers die Fronthaube sich um den Betrag z senkt und entsprechend ihren Abstand zu den gegebenenfalls harten und damit verletzungsgefährdenden Teilen im Motorraum verringert, während zugleich die Fronthaube 1 und damit auch das Haubenschloß 3 sich um den Betrag x, in Fahrtrichtung gesehen nach hinten, verlagert. Wären alle vier Gelenke ortsfest ausgebildet, könnte die Verlagerungsbewegung durch das Viergelenk-Scharnier 4 nicht vollzogen werden, da die vier Gelenke 9 bis 12 nur einen Schwenkweg, nämlich den, der für die Öffnungsbewegung der Fronthaube 1 zugrundegelegt wird, definieren und die Verlagerungsbewegung v somit statisch überbestimmt wäre. Aufgrund der lageveränderbaren Ausbildung des Gelenks 9 wird die statische Überbestimmung des Viergelenks 4 aufgehoben und die Umwandlung der Aufprallenergie eines Fußgängeraufpralls auf die Fronthaube 1 wird in die entsprechende Deformationsenergie (sowie in weitere, den Aufprall aus anderen Gründen abmindernde Energien) umgewandelt. Die Lageänderung des Gelenks 9 ist in Fig. 3 mit d₉ bezeichnet. Man erkennt, daß für eine relativ bedeutsame vertikale Verlagerung z eine geringe Lageänderung des Gelenks 9 ausreicht, die entlang einer stetigen Dehnungkurve d über z verläuft, so daß eine realistische Umwandlung der Aufprallenergie in Deformationsenergie der Energiespeichereinheit 16 gegeben ist. Man erkennt ferner, daß durch die Lageänderung des Gelenks 9 die beiden Lenker 5 und 6 ihre Winkellage zueinander geringfügig geändert haben, die sonst statisch das Viergelenk 4 bestimmt.

Soweit nicht ausdrücklich angegeben, bezeichnen dieselben Bezugszeichen bei der Beschreibung der nachfolgenden Ausführungsbeipiele dieselben Teile wie in den Fig. 1 bis 3, so daß in soweit auf die vorstehende Erläuterungen verwiesen wird, um Wiederholungen zu vermeiden.

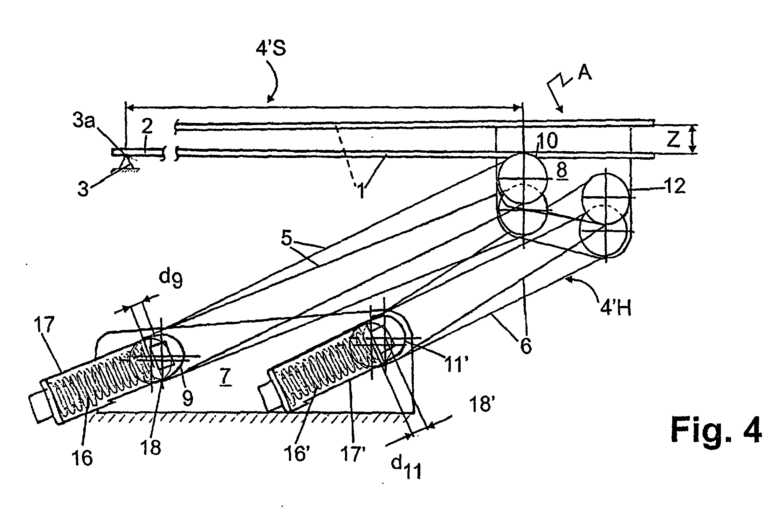

Bei dem weiteren Ausführungsbeispiel mit einem Viergelenk-Scharnier 4' gemäß Fig. 4 ist auch das Gelenk 11' des kürzeren Lenkers 6 ebenfalls in seiner Lage veränderbar ausgebildet, wobei diese Lageänderung mit denselben Mitteln wie bei dem Gelenk 9 realisiert ist. Wie aus Fig. 4 ersichtlich, werden im Falle eines Aufpralls beide Federn 16, 16' gestaucht, wodurch eine Drehung der Fronthaube 1 um die Achse 3a des Haubenschlosses 3 ermöglicht ist und eine horizontale Verlagerung der Fronthaube 1 entfällt. Man erkennt, daß die Lage der beiden Gelenke 9, 11' zueinander sich ebenfalls verändert. Es versteht sich, daß es grundsätzlich möglich ist, die in ihrer Lage veränderbaren Gelenke auch an dem Fronthaubenteil 8 vorzusehen, an dem Karosserieteil 7 aber die Führungen ohne Verletzungsgefahr für einen Fußgänger günstiger angeordnet werden können.

Diese besonders bevorzugte Ausbildung des Viergelenk-Scharniers 4' weist insbesondere den Vorteil auf, daß das Haubenschloß 3 nur eine Drehachse um die Haubenschloßachse 3a definiert und durch die Differenz der Lageänderung d₉ des Gelenks 9 längeren Lenkers 5 und d₁₁ des Gelenks 11' kürzeren Lenkers 6 die bei den vorherigen Ausführungsbeispielen erforderliche Horizontalverlagerung der Fronthaube 1 und damit des Haubenschlosses 3 kompensiert. Die Fronthaube 1 schwenkt somit um die Achse 3a des Haubenschlosses 3, und lediglich die Höhe der Fronthaube 1 wird ausgehend von der in Fig. 4 gestrichelt dargestellten Schließstellung in die in durchgezogener Linie dargestellte Überlaststellung H verändert. Man erkennt, daß die Lageänderung des Gelenks 9 geringer ausfällt als die des Gelenks 11', wobei beide Federn 16, 16' gestaucht werden. Demgemäß ist die Energiespeichereinheit 16, 16' in beiden Lenkern Führungen 17, 17' als Druckfeder ausgebildet, wodurch vorteilhaft beim Verschwenken der Fronthaube 1 in die (nicht dargestellte) Öffnungsstellung O aus der in Fig. 4 gestrichelt dargestellten Schließstellung S das Eigengewicht der Fronthaube 1 durch dieselben Druckfedern aufgenommen wird.

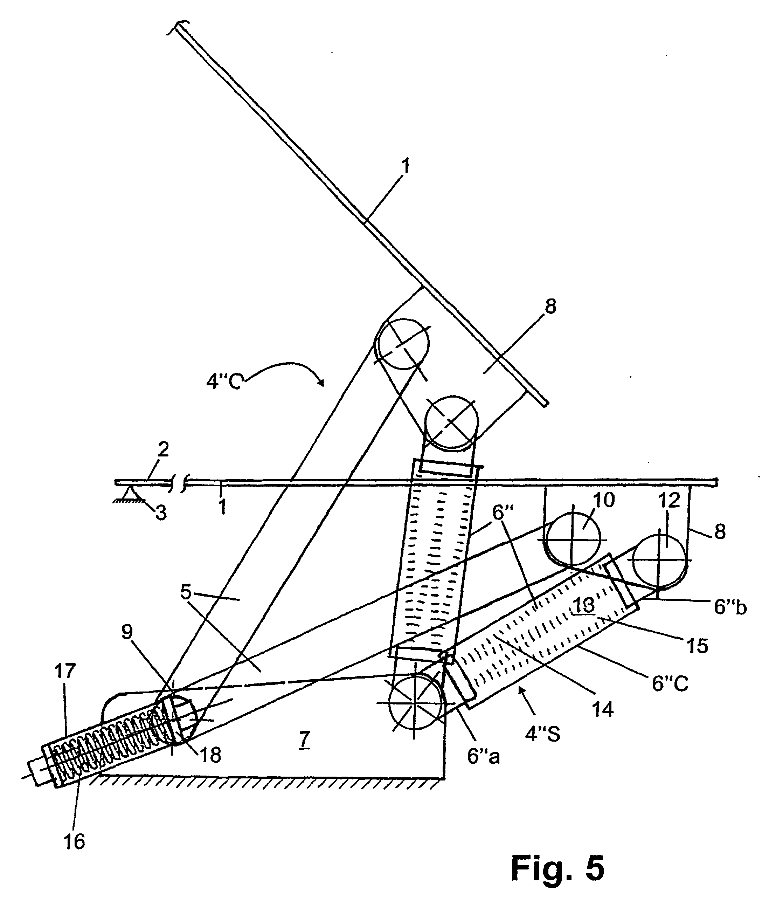

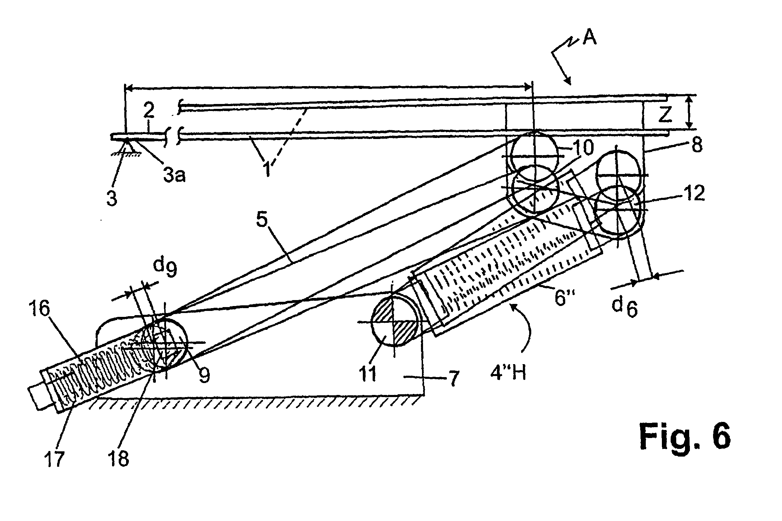

Eine vorteilhafte Variante eines Viergelenk-Scharniers 4" ist in den Fig. 5 und 6 gezeigt. Dort - in Abwandlung zu dem Ausführungsbeipsiel der Fig. 2 und 3 - ist der kürzere Lenker 6" nicht starr, sondern mit veränderbarer Länge ausgebildet. Während der längere Lenker 5 als starrer Lenker ausgebildet ist, ist der kürzere Lenker 6" in einem zentralen Bereich 6"a, an den sich die die Gewerbe der Drehgelenke 11, 12 aufweisenden Endstücke 6"b bzw. 6"c anschließen, mit einer als Doppelfeder ausgebildeten integrierten Energiespeicher 13 ausgestattet, der eine Veränderung der Länge des kürzeren Lenkers 6" dergestalt zuläßt, daß der Abstand der Achsen der Drehlenke 11 und 12 veränderlich ist. Hierzu ist der mittels starker Zugfedern ausgebildete Energiespeicher 13 unter Überwindung seiner Vorspannung zu belasten, wobei die Last derart ausgelegt ist, daß sie das Eigengewicht der an dem Haubenteil 8 angeordneten Fronthaube 1 nennenswert übersteigen muß. Neben einer Druckfeder 14 ist in dem Abschnitt 6"a des kürzeren Lenkers 6" auch eine Zugfeder 15 integriert, so daß der voreingestellte Abstand der Achsen der Drehgelenke 11, 12 von der im unbelasteten Zustand wiedergegebenen Länge des kürzeren Lenkers 6" eingehalten ist.

In Fig. 6 ist der Überlastfall aufgrund eines Fußgängeraufpralls auf die Fronthaube 1 und die sich hieraus ergebende Deformation des Viergelenk-Scharniers 4" insgesamt und insbesondere des kürzeren Lenkers 6" näher dargestellt. Gestrichelt ist in Fig. 4 die Schließstellung S dargestellt, während in durchgezogener Linie die Überlaststellung H aufgrund eines schematisch mit Pfeil A angedeuteten Aufpralls eines Fußgängers dargestellt ist. Die Änderung der Länge des kürzeren Lenkers 6" erfolgt anhand eines Energiespeichers 13, der vorzugsweise als Druckfeder ausgebildet ist und dessen Betrag größer ist als die Komprimierung der Energiespeichereinheit 16 aufgrund der Verlagerung des Drehgelenks 9. Der besondere Vorteil bei der vorliegenden Ausführungsform besteht darin, daß in der in Fig. 5 mit O bezeichneten Öffnungsstellung der Fronthaubenanordnung der Lenker 5 derart relativ zur Achse der Aufnahme 17 für die Energiespeichereinheit 16 verdreht ist, daß ein Nachgeben derselben ausgeschlossen ist.

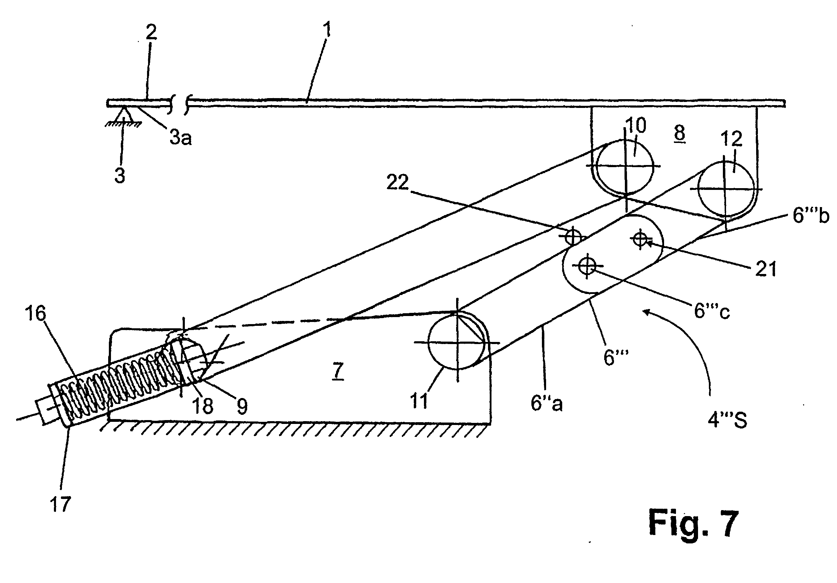

Eine weitere Ausführungsform eines Viergelenkschamiers 4'" für eine Fronthaubenanordnung gemäß Fig. 1 ist in Fig. 7 dargestellt. Die vorliegende Fronthaubenanordnung zeigt nur die Schließstellung S der Fronthaube 1.

Der Lenker 6"' des Viergelenk-Scharniers 4"' ist hierbei zweiteilbar ausgebildet, indem der Lenker 6"' in zwei Teillenker 6"'a und 6"'b unterteilt ist, welche über ein Hilfsgelenk 6"'c miteinander verbunden sind. Im Überlastfall wird eine Abscherbolzen 21 durch einen am Haubenteil 8 angeordneten Anschlag 22 abgeschert und so eine Drehung der Fronthaube 1 um das Haubenschloß 3 ohne horizontale Verlagerung derselben ermöglicht.

Die Erfindung ist vorstehend anhand von verschiedenen Ausführungsbeispielen näher erläutert worden, die sämtlichst reversibel, als Federn ausgebildete, Energiespeicher gezeigt haben, die besonders bevorzugt sind. Es versteht sich, daß in gleicher Weise wie die Federn auch plastisch änderbare Materialbestandteile vorgesehen sein können, die eine irreversibel Lageänderung des Gelenks 9 und/oder 11' bewirken, die dadurch einen geringeren mechanischen Aufwand bei der Montage und bei der Fertigung bedeuten.

## Patentansprüche

1. Fronthaubenanordnung, bei der eine Fronthaube (1) eines Fahrzeugsüber mindestens ein Viergelenk-Schamier (4; 4'; 4"; 4''') an den Rahmen des Fahrzeugs angelenkt ist, welche Fronthaube (1) ferner über wenigstens ein Haubenschloß (3) verriegelbar ist,
**dadurch gekennzeichnet,**
**daß** das mindestens eine Viergelenk-Scharnier (4; 4'; 4"; 4''') wenigstens einen Lenker (6; 5') aufweist, dessen Gelenk (9, 11') an einem der Teile Fronthaube (1) und Karosserie des Fahrzeugs unter der Last eines Aufpralls eines Fußgängers in seiner Lage veränderbar ist.

2. Fronthaubenanordnung nach Anspruch 1, **dadurch gekennzeichnet, daß** auch der andere Lenker des Viergelenk-Scharniers (4; 4'; 4"; 4'") ein Gelenk (11') an einem der Teile Fronthaube (1) und Karosserie des Fahrzeugs aufweist, das in seiner Lage veränderbar ist.

3. Fronthaubenanordnung nach Anspruch 1 oder 2, **dadurch gekennzeichnet, daß** das in seiner Lage veränderbare Gelenk (9, 11') von einem Energiespeicher (16; 16') in seine Ruhelage vorgespannt ist.

4. Fronthaubenanordnung nach Anspruch 3, **dadurch gekennzeichnet, daß** der Energiespeicher eine Feder (16) umfaßt, die spannbar ausgebildet ist.

5. Fronthaubenanordnung nach Anspruch 3 oder 4, **dadurch gekennzeichnet, daß** der Energiespeicher (16) einen deformierbaren Bestandteil umfaßt, der die Aufprallenergie in Deformationsenergie durch plastische Formänderung des Betandteils umwandelt.

6. Fronthaubenanordnung nach einem der Ansprüche 1 bis 5, **dadurch gekennzeichnet, daß** beiderseits der Fronthaube (1) jeweils ein Mehrgelenk-Scharnier (4; 4'; 4"; 4'") angeordnet ist.

7. Fronthaubenanordnung nach einem der Ansprüche 1 bis 6, **dadurch gekennzeichnet, daß** die Fronthaube (1) zugleich mit der Änderung der Lage der wenigstens einen Anlenkung (9; 11') eine Verlagerungsbewegung in Richtung (x) auf die Windschutzscheibe des Fahrzeugs ausführt.

8. Fronthaubenanordnung nach einem der Ansprüche 1 bis 7, **dadurch gekennzeichnet, daß** die Drehgelenke (10, 12) der Lenker (5, 6) des Viergelenk-Scharniers (4) fest an einem Fronthaubenteil (8) der Fronthaube (1) angeordnet sind.

9. Fronthaubenanordnung nach einem der Ansprüche 1 bis 7, **dadurch gekennzeichnet, daß** die an der Fronthaube (1) angeschlagenen Drehgelenke (10, 12) der Lenker (5, 6) des Viergelenk-Schamiers (4) bei Aufprall eines Fußgängers auf die Fronthaube (1) eine definierte Bewegung um die an der Karosserie des Fahrzeugs angeordneten Drehgelenke (9, 11; 11') der Lenker (5, 6) ausführen, und daß bei einem Aufprall einer der Lenker (5) mit seinem karosserieseitigen Drehgelenk (9; 11') eine in Richtung auf die Ruhelage des Lenkers (5) vorgespannten Energiespeichereinheit (16) gegen seine Vorspannung zur wenigstens teilweisen Kompensation der Längenänderung des mit veränderbaren Länge ausgebildeten Lenkers (6) unter entsprechender Änderung seiner Lage zur Karosserie spannt.

10. Fronthaubenanordnung nach Anspruch 9, **dadurch gekennzeichnet, daß** die Energiespeichereinheit (16) im wesentlichen in axialer Verlängerung des zugeordneten Lenkers (5) angeordnet ist, wenn das an der Fronthaube (1) angeordnete Scharnierteil (8) des Viergelenk-Scharniers (4) durch Lageänderung des mit veränderbaren Lage ausgebildeten Gelenks (9) bei einem Aufprall auf die Fronthaube (1) aus seiner Ausgangsstellung heraus verlagert ist.

11. Fronthaubenanordnung nach einem der Ansprüche 1 bis 10, **dadurch gekennzeichnet; daß** das Haubenschloß (3) in seinem verriegelten Zustand ein horizontales Verlagern (x) der Fronthaube (1) zuläßt.

12. Fronthaubenanordnung nach Anspruch 11, **dadurch gekennzeichnet, daß** das Haubenschloß (3) insgesamt verlagerbar ist.

13. Fronthaubenanordnung nach Anspruch 11, **dadurch gekennzeichnet, daß** das Haubenschloß (3) einen Ausweichraum im Anschluß an seine verriegelte Schließlage aufweist, der eine Führung für eine im wesentlichen horizontale Verlagerung der Fronthaube (1) bzw. eines mit der Fronthaube (1) verbundenen Halteteils nach hinter definiert.

14. Fronthaubenanordnung nach einem der Ansprüche 11 bis 13, **dadurch gekennzeichnet, daß** ein Energiespeicherglied das Haubenschloß entgegen einem horizontalen Verlagern (x) vorspannt und bei einem Aufprall das Energiespeicherglied unter Aufnahme eines Teils der Aufprallenergie spannbar ist.

15. Fronthaubenanordnung nach einem der Ansprüche 1 bis 14, **dadurch gekennzeichnet, daß** der Abstand der beiden an einem Anschlagteil (7) angeordneten Drehpunkte (9, 11) sich bei einem Aufprall eines Fußgängers vergrößert.

16. Fronthaubenanordnung nach einem der Ansprüche 1 bis 15, **dadurch gekennzeichnet, daß** das Viergelenk-Scharnier (4; 4'; 4"; 4"') derart an dem Rahmen des Fahrzeugs angeordnet ist, daß die Fronthaube (1) bei Lösen des Haubenschlosses (3) ohne Veränderung der Lage des wenigstens einen Gelenks (9) des Viergelenk-Scharniers (4; 4'; 4"; 4''') öffnenbar ist.

17. Fronthaubenanordnung nach einem der Ansprüche 1 bis 16, **dadurch gekennzeichnet, daß** wenigstens ein Lenker (6") mit veränderbarer Länge ausgebildet ist.

18. Fronthaubenanordnung nach einem der Ansprüche 1 bis 16, **dadurch gekennzeichnet, daß** wenigstens ein Lenker (6'") wenigstens zweiteilbar ausgebildet ist.

19. Fronthaubenanordnung nach einem der Ansprüche 1 bis 18, **dadurch gekennzeichnet, daß** das Viergelenk-Scharnier (4) im fahrbereiten Zustand des Fahrzeugs in einer nachgiebigen angehobenen Lage angeordnet ist.

20. Viergelenk-Scharnier,
**dadurch gekennzeichnet,**
**daß** der Abstand der beiden Anlenkungen (9-11; 10-12) wenigstens zweier benachbarter Lenker (6; 5) an demselben Anschlagteil (7) durch eine Überlast veränderbar ist.

## Claims

1. A front-hood arrangement, wherein a front hood (1) of a vehicle is coupled to the frame of the vehicle via at least one four-joint hinge (4; 4'; 4"; 4'''), which front hood (1) can be also be locked by means of at least one hood lock (3),
**characterized in**
**that** the at least one four-joint hinge (4; 4'; 4"; 4''') has at least one link (6; 5'), the position of the joint (9, 11') of which on one of the parts front hood (1) and body of the vehicle can be changed under the load of an impact of a pedestrian.

2. The front-hood arrangement as claimed in claim 1, **characterized in that** the other link of the four-joint hinge (4; 4'; 4"; 4"') also has a joint (11') which can be changed in position on one of the parts front hood (1) and body of the vehicle.

3. The front-hood arrangement as claimed in claim 1 or 2, **characterized in that** the joint (9, 11') which can change in position is prestressed into its at-rest position by an energy store (16; 16').

4. The front-hood arrangement as claimed in claim 3, **characterized in that** the energy store comprises a spring (16) that is capable to be stressed.

5. The front-hood arrangement as claimed in claim 3 or 4, **characterized in that** the energy store (16) comprises a deformable component which converts the impact energy into deformation energy through plastic deformation of the component.

6. The front-hood arrangement as claimed in one of claims 1 to 5, **characterized in that** a multiple-joint hinge (4; 4'; 4"; 4"') is arranged on both sides of the front hood (1).

7. The front-hood arrangement as claimed in one of claims 1 to 6, **characterized in that** the front hood (1), at the same time as the change in position of the at least one coupling point (9; 11'), executes a translational movement in the direction (x) toward the windshield of the vehicle.

8. The front-hood arrangement as claimed in one of claims 1 to 7, **characterized in that** the rotary joints (10, 12) of the links (5, 6) of the four-joint hinge (4) are arranged fixed to a front-hood part (8) of the front hood (1).

9. The front-hood arrangement as claimed in one of claims 1 to 7, **characterized in that** the rotary joints (10, 12), which are mounted on the front hood (1), of the links (5, 6) of the four-joint hinge (4), in the event of an impact of a pedestrian on the front hood (1), execute a defined movement about the rotary joints (9, 11; 11'), arranged on the body of the vehicle, of the links (5, 6), and **in that** in the event of an impact, one of the links (5), by means of its body-side rotary joint (9; 11'), stresses an energy storage unit (16), which is prestressed toward the at-rest position of the joint (5), counter to its prestress, in order to at least partially compensate for the change in length of the link (6) which is designed to change in length, with a corresponding change in its position with respect to the body.

10. The front-hood arrangement as claimed in claim 9, **characterized in that** the energy storage unit (16) is arranged substantially as an axial extension of the associated link (5) when the hinge part (8) of the four-joint hinge (4) arranged on the front hood (1) has been displaced out of its starting position as a result of a change in position of the joint (9) which is designed to change in position in the event of an impact on the front hood (1).

11. The front-hood arrangement as claimed in one of claims 1 to 10, **characterized in that** the hood lock (3) allows a horizontal displacement (x) of the front hood (1) in its locked position.

12. The front-hood arrangement as claimed in claim 11, **characterized in that** the hood lock (3) overall is displaceable.

13. The front-hood arrangement as claimed in claim 11, **characterized in that** the hood lock (3) has a yield space adjoining its locked position, which provides defined guidance for a substantially horizontal displacement of the front hood (1) or of a holding part connected to the front hood (1) toward the rear.

14. The front-hood arrangement as claimed in one of claims 11 to 13, **characterized in that** an energy storage member prestresses the hood lock in the opposite direction to a horizontal displacement (x) and, in the event of an impact, the energy storage member can be stressed, so as to absorb some of the impact energy.

15. The front-hood arrangement as claimed in one of claims 1 to 14, **characterized in that** the distance between the two rotation points (9, 11) which are arranged on a mounting part (7) is increased in the event of an impact of a pedestrian.

16. The front-hood arrangement as claimed in one of claims 1 to 15, **characterized in that** the four-joint hinge (4; 4'; 4"; 4''') is arranged on the frame of the vehicle in such a manner that the front hood (1) can be opened when the hood lock (3) is released without the position of the at least one joint (9) of the four-joint hinge (4; 4'; 4"; 4''') changing.

17. The front-hood arrangement as claimed in one of claims 1 to 16, **characterized in that** at least one link (6") is designed to change in length.

18. The front-hood arrangement as claimed in one of claims 1 to 16, **characterized in that** at least one link (6''') is designed so that it can be separated into at least two parts.

19. The front-hood arrangement as claimed in one of claims 1 to 18, **characterized in that** the four-joint hinge (4), when the vehicle is ready to drive, is arranged in a resilient, raised position.

20. A four-joint hinge,
**characterized in**
**that** the distance between the two articulation points (9-11; 10-12) of at least two adjacent links (6; 5) on the same mounting part (7) can be changed by means of an overload.

## Revendications

1. Ensemble de capot avant dans lequel un capot avant (1) d'un véhicule est articulé sur le châssis du véhicule au moyen d'au moins une charnière à quadruple articulations (4 ; 4'; 4" ; 4'''), lequel capot avant
(1) peut en outre être verrouillé au moyen d'une serrure de capot (3),
**caractérisé en ce**
**que** l'au moins une charnière à quadruple articulations (4 ; 4'; 4" ; 4''') comporte au moins un bras (6; 5') dont l'articulation (9, 11') est modifiable en position dans une des parties du capot avant (1) et de la carrosserie du véhicule sous l'effort exercé lors d'une collision avec un piéton.

2. Ensemble de capot avant selon la revendication 1, **caractérisé en ce que** l'autre bras de la charnière à quadruple articulations (4 ; 4'; 4" ; 4''') comporte également une articulation (11') au niveau de l'une des parties du capot avant (1) et de la carrosserie du véhicule, laquelle articulation est modifiable en longueur.

3. Ensemble de capot avant selon la revendication 1 ou 2, **caractérisé en ce que** l'articulation (9, 11'), de longueur modifiable, est préalablement tendue par un accumulateur d'énergie (16 ; 16') dans sa position de repos.

4. Ensemble de capot avant selon la revendication 3, **caractérisé en ce que** l'accumulateur d'énergie comporte un ressort (16) qui est conformé de façon à pouvoir être tendu.

5. Ensemble de capot avant selon la revendication 3 ou 4, **caractérisé en ce que** l'accumulateur d'énergie (16) comporte un composant déformable qui transforme l'énergie de la collision en énergie de déformation par déformation plastique du composant.

6. Ensemble de capot avant selon l'une des revendications 1 à 5, **caractérisé en ce qu'**une charnière à quadruple articulations (4 ; 4' ; 4" ; 4''') est agencée des deux côtés du capot avant (1).

7. Ensemble de capot avant selon l'une des revendications 1 à 6, **caractérisé en ce que** le capot avant (1) réalise en même temps qu'une modification de la position de l'au moins une articulation (9 ; 11') un déplacement en direction (x) du pare-brise du véhicule.

8. Ensemble de capot avant selon l'une des revendications 1 à 7, **caractérisé en ce que** les articulations (10, 12) des bras (5, 6) de la charnière à quadruple articulations (4) sont agencées fixes sur les parties de capot avant (8) du capot avant (1).

9. Ensemble de capot avant selon l'une des revendications 1 à 7, **caractérisé en ce que** les articulations (10, 12), montées sur le capot avant (1), des bras (5, 6) de la charnière à quadruple articulations (4) réalisent un déplacement défini autour des articulations (9, 11 ; 11'), agencées sur la carrosserie du véhicule, des bras (5, 6), et **en ce que** en cas de collision l'un des bras (5) avec son articulation du côté de la carrosserie (9; 11') tend une unité d'accumulation d'énergie (16), préalablement tendu en direction de la position de repos du bras (5), en s'opposant à une tension préalable pour compenser au moins partiellement la variation de longueur du bras (6), conformé de façon à avoir une longueur modifiable, en modifiant de façon correspondante sa position par rapport à la carrosserie.

10. Ensemble de capot avant selon la revendication 9, **caractérisé en ce que** l'unité d'accumulation d'énergie (16) est agencée sensiblement dans le prolongement axial du bras associé (5), lorsque la partie de charnière (8), agencée sur le capot avant (1), de la charnière à quadruple articulations (4) est déplacée depuis sa position de départ en modifiant la position de l'articulation (9) conformée de façon à pouvoir modifier sa position, en cas de collision sur le capot avant (1).

11. Ensemble de capot avant selon l'une des revendications 1 à 10, **caractérisé en ce que** la serrure de capot (3) dans son état verrouillé permet un déplacement horizontal (x) du capot avant (1).

12. Ensemble de capot avant selon la revendication 11, **caractérisé en ce que** la serrure de capot (3) est dans l'ensemble déplaçable.

13. Ensemble de capot avant selon la revendication 11, **caractérisé en ce que** la serrure de capot (3) comporte un espace d'évitement dans le raccordement à sa position de fermeture verrouillée, lequel espace définit en arrière un guide pour un déplacement sensiblement horizontal du capot avant (1) ou une partie de retenue reliée au capot avant (1).

14. Ensemble de capot avant selon l'une des revendications 11 à 13, **caractérisé en ce qu'**un élément accumulateur d'énergie de la serrure de capot est préalablement tendu en s'opposant à un déplacement horizontal (x) et en cas de collision l'élément accumulateur d'énergie peut être tendu en recevant une partie de l'énergie de la collision.

15. Ensemble de capot avant selon l'une des revendications 1 à 14, **caractérisé en ce que** la distance entre les deux articulations (9, 11) agencées sur une pièce de fixation (7) augmente en cas de collision avec un piéton.

16. Ensemble de capot avant selon l'une des revendications 1 à 15, **caractérisé en ce que** la charnière à quadruple articulations (4 ; 4' ; 4" ; 4''') est agencée sur le châssis du véhicule de sorte que le capot avant (1) peut être ouvert lors du détachement de la serrure de capot (3) sans modifier la position de l'au moins une articulation (9) de la charnière à quadruple articulations (4 ; 4' ; 4" ; 4"').

17. Ensemble de capot avant selon l'une des revendications 1 à 16,**caractérisé en ce que** au moins un bras (6") est conformé de façon à avoir une longueur modifiable.

18. Ensemble de capot avant selon l'une des revendications 1 à 16, **caractérisé en ce que** au moins un bras (6"') est conformée de façon à être divisible en deux parties.

19. Ensemble de capot avant selon l'une des revendications 1 à 18, **caractérisé en ce que** la charnière à quadruple articulations (4) est agencée dans une position soulevée élastique lorsque le véhicule est à l'état prêt à rouler.

20. Charnière à quadruple articulations,
**caractérisée en ce**
**que** la distance entre les deux articulations (9-11 ; 10-12) d'au moins deux bras adjacents (6 ; 5) est modifiable au niveau de la même pièce de fixation (7) par une surcharge.
